# EUROPEAN PATENT APPLICATION

(11) **EP 3 205 920 A1**
(43) Date of publication of application: **16.08.2017**
(21) Application number: 17155073.4
(22) Date of filing: 07.02.2017
(51) Int. Cl.: F16L 53/00, H05B 3/56

(54) **INTERNALLY HEATED HOSE**

(30) Priority: 12.02.2016 US 201662294404 P
(71) Applicant: Graco Minnesota Inc., Minneapolis, MN 55413 (US)
(72) Inventor: TIX, Joseph E, Hastings, MN 55033 (US); McCORMICK, Martin P, Forest Lake, MN 55025 (US); BRUDEVOLD, Mark J, Fridley, MN 55432 (US)
(74) Representative: Miller Sturt Kenyon

(57) **Abstract**

A temperature control unit includes a fitting, a heating wire, a first temperature sensor, and a housing, which contains the first temperature sensor and portions of the fitting and the heating wire. The fitting includes a fluid inlet, a fluid outlet, a flow channel extending from the fluid inlet to the fluid outlet, and a passage extending through a wall of the fitting to the flow channel. The heating wire extends through the passage and into the flow channel. The first temperature sensor is secured to an external surface of the fitting opposite the flow channel and is electrically connected to the heating wire.

## Description

### CROSS-REFERENCE TO RELATED APPLICATION(S)

This application claims the benefit of U.S. Provisional Application No. 62/294,404 filed February 12, 2016, for "Internally Heated Hose" by Joseph E. Tix, Martin P. McCormick, and Mark J. Brudevold.

### BACKGROUND

The present invention relates generally to heated fluid delivery systems and more particularly to temperature-controlled internally heated hoses.

The present invention can be particularly suited to applications requiring delivery of a fluid through a hose exposed to ambient temperatures, which can adversely reduce a temperature of the fluid in the hose, rendering the fluid ineffective for the particular application. For instance, the application of spray foam insulation can involve pumping reactive fluids through one or more hoses exposed to varying ambient temperatures. In some low temperature environments, the physical properties of the fluids can be changed during the application process, causing the application to fail or resulting in the application of an ineffective product. A device is needed to automatically apply heat to the fluid in the hose as needed to maintain an optimal outlet fluid temperature during application.

### SUMMARY

In one aspect, a temperature control unit includes a fitting, a heating wire, a first temperature sensor, and a housing, which contains the first temperature sensor and portions of the fitting and the heating wire. The fitting includes a fluid inlet, a fluid outlet, a flow channel extending from the fluid inlet to the fluid outlet, and a passage extending through a wall of the fitting to the flow channel. The heating wire extends through the passage and into the flow channel. The first temperature sensor is secured to an external surface of the fitting opposite the flow channel and is electrically connected to the heating wire.

In another aspect, an automatic temperature-controlled heated hose assembly includes a temperature control unit and a hose. The temperature control unit includes a fitting, a heating wire, and a first temperature sensor. The fitting includes a fluid inlet, a fluid outlet, a first flow channel extending from the fluid inlet to the fluid outlet, and a passage extending through a wall of the fitting to the flow channel. The heating wire extends through the passage and into the first flow channel. The first temperature sensor is secured to an external surface of the wall of the fitting opposite the first flow channel and is configured to respond to a first temperature of the external surface. The hose has a second flow channel in fluid communication with the fluid outlet. The heating wire extends into the second flow channel for at least a partial length of the hose.

In yet another aspect, a method of controlling a fluid temperature in a hose includes connecting a temperature control unit to a hose, providing a fluid flow to the hose through a fitting of the temperature control unit, detecting a temperature of an external surface of a wall of the fitting opposite a fluid flow channel with a first temperature sensor having a control temperature set point, and supplying electrical power to a heating wire inserted into a fluid flow channel of the hose to supply heat to the fluid or interrupting the supply of electrical power to the heating wire. Electrical power is supplied to the heating wire when the temperature detected is below the temperature set point, and electrical power to the heating wire is interrupted when the temperature detected reaches the control temperature set point.

The present summary is provided only by way of example, and not limitation. Other aspects of the present disclosure will be appreciated in view of the entirety of the present disclosure, including the entire text, claims and accompanying figures.

### BRIEF DESCRIPTION OF THE DRAWINGS

FIG. 1 is a perspective view of a temperature control unit (TCU).
FIG. 2 is a schematic cross-sectional view of the TCU of FIG. 1 connected to a hose.
FIG. 3 is a perspective view of the TCU of FIG. 1 with a portion of a TCU housing removed.
FIG. 4 is a perspective view of a TCU fitting.

While the above-identified figures set forth embodiments of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features, steps and/or components not specifically shown in the drawings.

### DETAILED DESCRIPTION

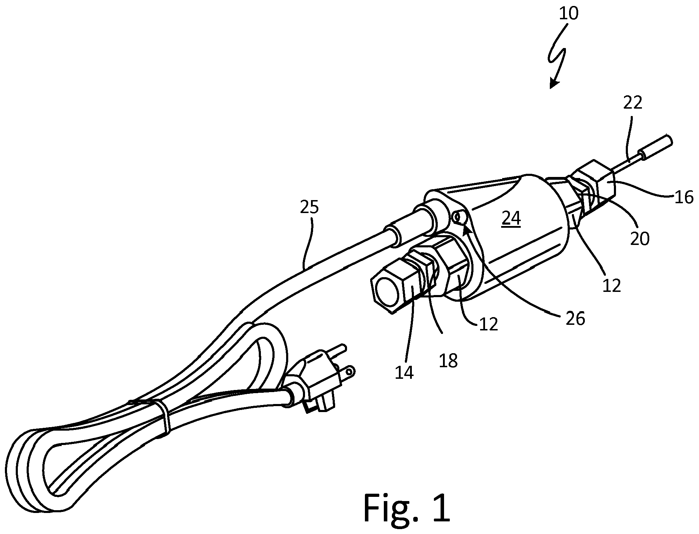

FIG. 1 is a perspective view of temperature control unit (TCU) 10. TCU 10 can be used to automatically apply heat to a fluid flowing through a hose to maintain a desired outlet fluid temperature during operation. TCU 10 can be used for the application of a spray foam insulation, which can involve pumping reactive fluids through one or more hoses. In general, the temperature of the reactive fluids must be kept within a specific range to maintain desired physical properties of the fluids for reaction. Low temperature environments can cause the physical properties of the fluids to be changed during the application process, causing the application to fail or resulting in the application of an ineffective product. TCU 10 can be used to automatically maintain the desired fluid temperature without operator input or control. TCU 10 can be adapted for installation with varying hose diameters and couplings, as well as varying fluids and desired outlet fluid temperatures. Although TCU 10 can be suited for use in spray foam applications, it will be understood by one of ordinary skill in the art that TCU 10 can be utilized for a wide variety of applications that require the application of heat to a flowing fluid. Furthermore, TCU 10 can be installed in applications in which heat may not be necessary. A benefit of TCU 10 is that the operator need not determine whether or not the application of heat will be required. Once TCU 10 is installed, heat can be automatically applied to the fluid as needed based on a detected temperature of the fluid. If the temperature of the fluid remains within the desired range, no heat will be provided.

As shown in FIG. 1, TCU 10 can have fitting 12, couplings 14 and 16, heating wire 22, housing 24, electrical power supply 25, and indicator light 26. Fitting 12 can provide a channel for fluid flow. Couplings 14 and 16 can be connected to opposite ends of fitting 12 (inlet 18 and outlet 20) to direct fluid from a fluid source (not shown) connected to coupling 14, through fitting 12, and into a hose (not shown) connected to coupling 16. Electrical power can be supplied to TCU 10 with power cord 25 (e.g., 120V grounded cord). Electrical power can be supplied to heating wire 22, which can apply heat to the fluid during operation. Heating wire 22 can be a metal wire with insulating sheath, such as an ETFE insulation, or similar heat conducting element as known in the art (e.g., as used in a variety of heating applications, including floor heating, etc.). Heating wire 22 can include two conducting wires connected at an outlet end and a drain wire. In one embodiment, heating wire 22 can be a 0.12-in. (0.3-cm) diameter heating wire. However, it will be understood by one of ordinary skill in the art that the diameter of heating wire 22 can be varied depending on the application and diameter of hose 28. Heating wire 22 can extend a full length of a hose (e.g., 50 feet (15 meters)) to provide heat to the fluid through the length of the hose. In some embodiments requiring the connection of multiple hoses, additional TCUs 10 can be connected between hoses. A length and resistance of heating wire 22 can be adjusted to modify a total hose wattage.

Electrical power can be supplied on an intermittent, as-needed, basis to maintain a desired temperature of the fluid. The supply of electrical power can be controlled by one or more temperature sensors (not shown) configured to respond to the temperature of the fluid flowing through fitting 12. Indicator light 26 can be used to indicate when electrical power is being supplied to heating wire 22 (e.g., indicator light 26 can turn on when electrical power to heating wire 22 is being supplied and turn off when electrical power to heating wire 22 has been interrupted). Indicator light 26 is not necessary for the operation of TCU 10, but can provide a helpful signal to the operator as to whether or not heat is being applied to the fluid during operation.

Housing 24 can contain portions of fitting 12 and heating wire 22, as well as one or more temperature sensors (not shown). Housing 24 can be potted with an epoxy resin or other suitable material to provide watertight protection for all electrical connections, sensors, and circuitry, including electrical connections to heating wire 22 and indicator light 26. One or more seals (not shown) can also be used to provide a watertight connection to fitting 12. Housing 24 can be an insulating material. In some embodiments, housing 24 can be colored-coded according to application (e.g., based on a desired temperature set point or hose diameter). As will be discussed further, each TCU 10 can have a different temperature set point to accommodate applications with differing fluid temperature requirements. Color-coding can be used to assist operators in identifying the appropriate TCU 10 for each application.

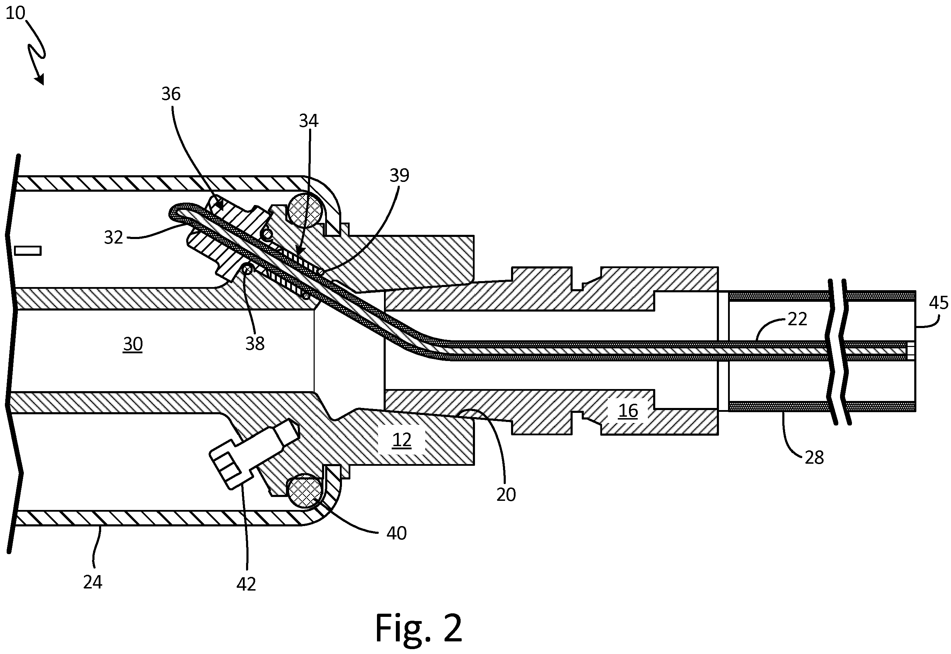

FIG. 2 is a schematic cross-sectional view of TCU 10 connected to hose 28. As shown in FIG. 2, coupling 16 can be connected to fitting outlet 20 at one end and hose 28 at an opposite end, providing flow channel 30, extending through fitting 12, coupling 16, and hose 28. Coupling 16 can be removably fastened to fitting 12, for example, by a threaded connection, to allow coupling 16 to be interchanged with alternative couplings 16 to accommodate varying hose 28 connections. Coupling 16 can be connected to hose 28 via standard connections (e.g., standard NPT threaded fittings or quick-connect couplings). In alternative embodiments, fitting 12 can be modified for direct connection to hose 28. Both fitting 12 and coupling 16 can be made of a metal or other material capable of withstanding high fluid pressures (e.g., exceeding 14,000 psi (97 MPa)). As will be discussed further, it can be important that the material fitting 12 is made of have a relatively high thermal conductivity.

Heating wire 22 can extend through a wall of fitting 12 via passage 32 into flow channel 30. Heating wire 22 can exit TCU 10 through fitting outlet 20 and coupling 16 before entering hose 28 and can extend through a full length of hose 28. Compression ferrule 34 and nut 36 can be used to hold heating wire 22 in position within TCU 10 and provide a tensile strength for heating wire 22 located in flow channel 30. One or more seals 38 and 39 can be used to prevent fluid from entering housing 24 through passage 32. Seals 38 and 39 can be O-rings, which fit around heating wire 22. Seal 38 can be disposed between compression ferrule 34 and nut 36; seal 39 can be disposed at a junction between compression ferrule 34 and fitting 12 adjacent an exit of passage 32. Seals 38 and 39 can be effective when fluid pressure in flow channel 30 exceeds 14,000 psi (97 MPa).

Seal 40, located at a connection point between housing 24 and fitting 12, can help prevent water or other fluids in contact with an external surface of TCU 10 from entering housing 24. Ground lug 42 on fitting 12 for power cord 25 and a drain wire can provide safety against electrical shock to operators in the event that seal 40 or other electrical protections fail, resulting in stray voltage. A ground fault circuit interrupter can also be included for operator safety.

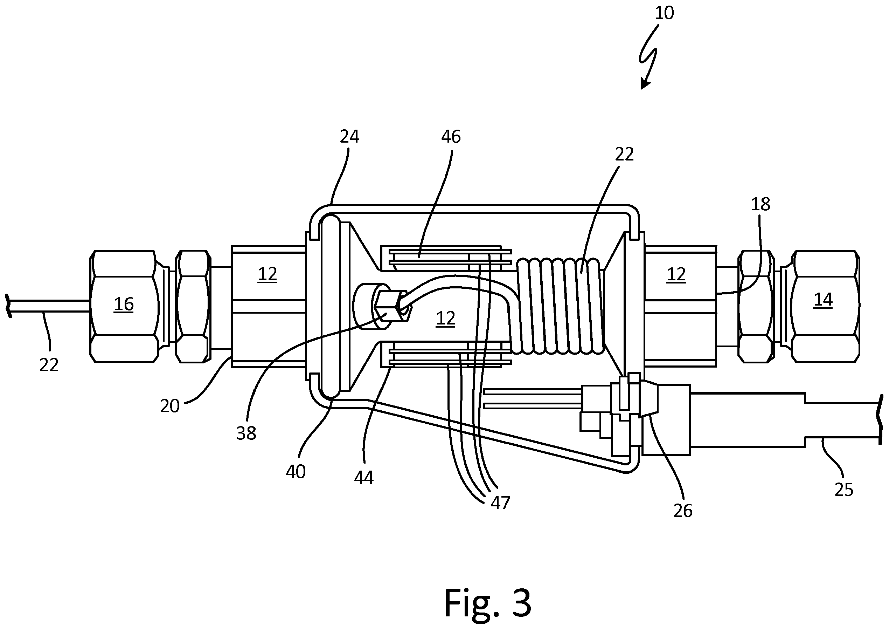

FIG. 3 is a perspective view of TCU 10 with a portion of housing 24 removed. As shown in FIG. 3, temperature sensor 44 can be secured directly to an external surface of fitting 12 opposite flow channel 30 (FIG. 2). Temperature sensor 44 can be a bimetallic-type mechanical thermal sensor with a mechanical relay switch, which can respond to temperature changes of fitting 12 caused by a temperature change of the fluid flowing through flow channel 30. Fitting 12 can be made of a material with high thermal conductivity (e.g., aluminum) in order for temperature sensor 44 to more quickly and effectively detect and respond to changes in the fluid temperature. Locating temperature sensor 44 on an external surface of fitting 12 can reduce the complexity of the TCU circuitry and design as compared to a heated hose assembly having a temperature sensor placed within the fluid flow channel. Use of a direct sensing bimetallic switch can eliminate the need for a separate thermocouple or resistance temperature detector (RTD) mounted in the fluid or in close proximity to the fluid near hose outlet 45, which would require additional fittings and additional circuitry to read the sensor and to communicate with a controller to turn electrical power to heating wire 22 on or off. Temperature sensor 44 can be a fixed thermostat having a control temperature set point, below which temperature sensor 44 can close a circuit. In alternative embodiments, temperature sensor 44 can be an adjustable thermostat or a programmable electronic thermostat. In general, the control temperature set point can be within a range of optimal outlet fluid temperatures at hose outlet 45. However, as will be discussed further, the outlet fluid temperature at hose outlet 45 may deviate from the control temperature set point. Heating wire 22 and temperature sensor 44 can be electrically connected in series, such that electrical power can be supplied to heating wire 22 via temperature sensor 44. When temperature sensor 44 detects a temperature of fitting 12 at or above the control temperature set point, the electrical circuit remains open thereby interrupting the supply of electrical power to heating wire 22. When temperature sensor 44 detects a temperature of fitting 12 below the control temperature set point, the circuit closes to allow electrical power to be supplied to heating wire 22.

In general, when electrical power is supplied to heating wire 22, the temperature of the fluid in a portion of flow channel 30 adjacent to temperature sensor 44 will be lower than an outlet temperature of the fluid at hose outlet 45 (FIG. 2) because the fluid that reaches hose outlet 45 will have been heated by heating wire 22 for a full or at least partial length of hose 28. In order to prevent overheating of fluid at hose outlet 45, heat can be added to fitting 12 to cause temperature sensor 44 to open, and thereby interrupt the supply of electrical power to heating wire 22, before the temperature of the fluid in flow channel 30 adjacent temperature sensor 44 reaches the temperature set point of temperature sensor 44. Heating wire 22 can be wrapped around a portion of the external surface of fitting 12 contained in housing 24 to heat fitting 12 as shown in FIG. 3. The amount of heat applied to fitting 12 can be increased or decreased by increasing or decreasing, respectively, the number of times heating wire 12 is wrapped around fitting 12.

By varying the number of times heating wire 22 is wrapped around fitting 12, TCUs 10 (utilizing the same temperature sensor 44 and heating wire 22) can be adapted for use with hoses of varying inner diameters and for fluids with differing optimal outlet temperatures. For instance, the number of wraps can be increased for small diameter hoses to reduce the amount of heat supplied to a smaller volume of fluid or to a fluid requiring a lower temperature set point than the temperature set point of temperature sensor 44. The number of wraps can be decreased for larger diameter hoses to increase the amount of heat supplied to a larger volume of fluid or for fluids having a desired temperature set point close to or above the temperature set point of temperature sensor 44. For example, a 50-ft (15-m) hose having a 3/8-in. (0.95-cm) internal diameter may require a TCU 10 having eight wraps of heating wire 22 to provide the desired outlet fluid temperature at hose outlet 45, whereas 50-ft (15-m) hose having a 1/2-in. (1.2-cm) internal diameter may require a TCU 10 having four wraps to provide the same desired outlet fluid temperature. The foregoing is provided merely as an example. It will be understood by one of ordinary skill in the art, that the number of wraps can be dependent on a wide variety of variables, including but not limited to, the thermal conductivity of fitting 12, temperature set point, desired outlet fluid temperature, fluid flow rate, and heat transfer properties of heating wire 22 and hose 28.

In some embodiments, a safety override temperature sensor 46 can be secured directly to fitting 12 in addition to temperature sensor 44. Override temperature sensor 46 can be used to automatically interrupt the supply of electrical power to heating wire 22 in the event that temperature sensor 44 fails. Override temperature sensor 46 can be a bimetallic-type mechanical thermal sensor similar to temperature sensor 44. Alternatively, override temperature sensor 46 can be an adjustable or programmable electronic thermostat. Override temperature sensor can have a maximum temperature set point that is higher than the control temperature set point and can be configured to open the electrical circuit, interrupting the supply of electrical power to heating wire 22, when override temperature sensor 46 detects a temperature of fitting 12 at or above the maximum temperature set point. It will be understood by one of ordinary skill in the art that the control temperature set point and maximum temperature set point can vary widely depending on application. In some embodiments designed specifically for spray foam insulation, the control temperature set point can be 80 degrees Fahrenheit (26 degrees Celsius) and the maximum temperature set point can be 140 degrees Fahrenheit (60 degrees Celsius) with a target fluid temperature at hose outlet 45 between 75 and 95 degrees Fahrenheit (24-35 degrees Celsius).

FIG. 3 shows electrical leads 47 for indicator light 26 and temperature sensors 44 and 46, however, electrical connections, including between power cord 25, indicator light 26, heating wire 22, and temperature sensors 44 and 46, have been removed for simplicity. In the embodiment shown in FIG. 3, temperature sensors 44 and 46 and heating wire 22 can simply be connected in series to ensure override temperature sensor 46 breaks the circuit in the event that temperature sensor 44 fails to. However, it will be understood by those of ordinary skill in the art that more complex circuitry, including additional electrical components can be utilized within the scope of the present invention to supply electrical power to heating wire 22 based on the detected temperature of fitting 12.

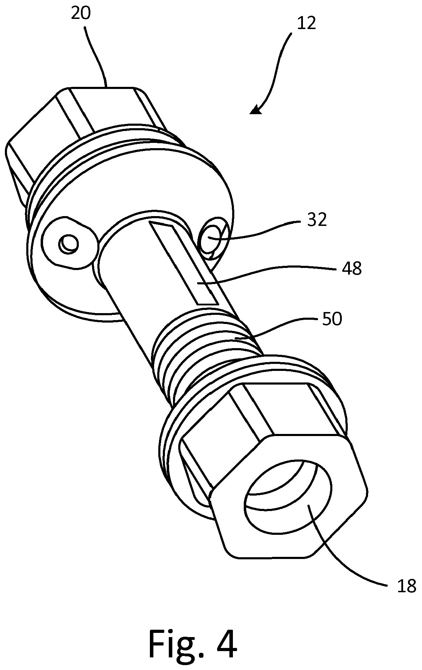

FIG. 4 is a perspective view of fitting 12. As shown in FIG. 4, the outer surface of fitting 12 can have one or more surfaces 48 adapted for locating temperature sensors 44 and 46. A portion of the fitting 12 wall at surface 48 can be reduced in thickness to improve thermal conduction across fitting 12 to temperature sensors 44 and 46. In one embodiment, the thickness of the fitting 12 wall at surface 48 can be reduced by removing an outer curvature of fitting 12 to create a flat area. In alternative embodiments, surfaces 48 can be made to conform to an external geometry of temperature sensors 44 and 46 to increase contact area with temperature sensors 44 and 46. It will be understood by one of ordinary skill in the art that thermal conductivity will improve with reduced wall thickness, but that the wall thickness should not be reduced in a manner that would compromise the structural integrity of fitting 12 during operation. In one embodiment, two surfaces 48 can be located on opposite sides of fitting 12 to locate sensors 44 and 46, respectively. Temperature sensors 44 and 46 can be secured to surfaces 48 in any manner known in the art that will not disrupt operation. In one embodiment, temperature sensors 44 and 46 can be secured to surfaces 48 and fitting 12 by a simple cable tie or tie-wrap.

In one embodiment, the external surface of fitting 12 can include spiral groove 50 in which heating wire 22 can be wrapped. Spiral groove 50 can be lengthened or shortened per application based on a predetermined number of heating wire 22 wraps. In alternative embodiments, heating wire 22 can be wrapped in only a portion of spiral groove 50. A geometry of spiral groove 50 can generally conform to the external geometry of heating wire 22 to increase contact area between fitting 12 and heating wire 22, thereby improving thermal conduction, and to help locate heating wire 22 wraps on fitting 12. Heating wire 22 can extend from spiral groove 50 through passage 32 and into flow channel 30.

TCU 10 can eliminate a need for operators to monitor and control the temperature of fluid flowing through a hose during application. By utilizing thermally conducting fitting 12, heat can be transferred between fluid in flow channel 30 and temperature sensor 44, allowing temperature sensor 44 to detect and respond to changes in the temperature of the fluid within flow channel 30. Temperature sensor 44 can open and close based on the detected temperature, thereby automatically supplying and interrupting electrical power supply, respectively, to heating wire 22, which can supply heat to the fluid through the length of the hose. The design of TCU 10, without modification of temperature sensor 44 or heating wire 22, can be easily adapted for use with fluids having different optimal temperature ranges or hoses of varying internal diameter by wrapping heating wire 22 around fitting 12 to influence the response of temperature sensor 44.

### Discussion of Possible Embodiments

The following are non-exclusive descriptions of possible embodiments of the present invention.

A temperature control unit includes a fitting, a heating wire, a first temperature sensor, and a housing, which contains the first temperature sensor and portions of the fitting and the heating wire. The fitting includes a fluid inlet, a fluid outlet, a flow channel extending from the fluid inlet to the fluid outlet, and a passage extending through a wall of the fitting to the flow channel. The heating wire extends through the passage and into the flow channel. The first temperature sensor is secured to an external surface of the fitting opposite the flow channel and is electrically connected to the heating wire.

The temperature control unit of the preceding paragraph can optionally include, additionally and/or alternatively, any one or more of the following features, configurations and/or additional components:

A further embodiment of the foregoing temperature control unit, wherein the first temperature sensor can have a control temperature set point, and wherein the first temperature sensor can close an electrical circuit with the heating wire to allow electrical power to be supplied to the heating wire when a temperature detected by the first temperature sensor is below the control temperature set point, and the first temperature sensor can open the electrical circuit with the heating wire thereby interrupting the supply of electrical power to the heating wire when a temperature detected by the first temperature sensor reaches the control temperature set point

A further embodiment of any of the foregoing temperature control units can include a second temperature sensor, wherein the second temperature sensor can be secured to the external surface of the fitting opposite the flow channel and can be electrically connected to the heating wire. The second temperature sensor can be an override temperature sensor having a maximum temperature set point, wherein the supply of electrical power to the heating wire can be interrupted when a temperature detected by the second temperature sensor reaches the maximum temperature set point.

A further embodiment of any of the foregoing temperature control units, wherein the first and second temperature sensors can be bimetallic-type mechanical thermal sensors.

A further embodiment of any of the foregoing temperature control units, wherein a portion of the wall of the fitting to which the first temperature sensor is attached can have a reduced thickness.

A further embodiment of any of the foregoing temperature control units, wherein the heating wire can be wrapped around an external surface of a portion of the fitting contained within the housing.

A further embodiment of any of the foregoing temperature control units, wherein the external surface of the fitting can comprise a spiral groove in which the heating wire can be wrapped.

A further embodiment of any of the foregoing temperature control units, wherein the heating wire can extend from the spiral groove through the passage and into the flow channel.

A further embodiment of any of the foregoing temperature control units can further include a coupling attached to the fluid outlet and can be configured to connect to a hose.

A further embodiment of any of the foregoing temperature control units, wherein the heating wire can be wrapped around the external surface of the fitting multiple times, and wherein a number of times the heating wire is wrapped around the external surface of the fitting is greater when the coupling is configured to connect to a hose having a smaller internal diameter than when the coupling is configured to connect to a hose having a larger internal diameter.

A further embodiment of any of the foregoing temperature control units can include a fastener configured to hold the heating wire in the passage and a seal configured to block fluid flow through the passage.

A further embodiment of any of the foregoing temperature control units, wherein the heating wire can exit the temperature control unit through the fitting fluid outlet.

A further embodiment of any of the foregoing temperature control units can include an electrical power source configured to supply electrical power to the heating wire, wherein electrical connections to the heating wire and the first temperature sensor can be contained within the housing.

A further embodiment of any of the foregoing temperature control units can include an indicator light, wherein the indicator light can be located on the housing and can be configured to indicate when electrical power is being supplied to the heating wire.

An automatic temperature-controlled heated hose assembly includes a temperature control unit and a hose. The temperature control unit includes a fitting, a heating wire, and a first temperature sensor. The fitting includes a fluid inlet, a fluid outlet, a first flow channel extending from the fluid inlet to the fluid outlet, and a passage extending through a wall of the fitting to the flow channel. The heating wire extends through the passage and into the first flow channel. The first temperature sensor is secured to an external surface of the wall of the fitting opposite the first flow channel and is configured to respond to a first temperature of the external surface. The hose has a second flow channel in fluid communication with the fluid outlet. The heating wire extends into the second flow channel for at least a partial length of the hose.

The automatic temperature-controlled heated hose assembly of the preceding paragraph can optionally include, additionally and/or alternatively, any one or more of the following features, configurations and/or additional components:

A further embodiment of the foregoing automatic temperature-controlled heated hose assembly, wherein the heating wire can be wrapped around an external surface of the fitting and can be configured to supply heat to the fitting.

A method of controlling a fluid temperature in a hose includes connecting a temperature control unit to a hose, providing a fluid flow to the hose through a fitting of the temperature control unit, detecting a temperature of an external surface of a wall of the fitting opposite a fluid flow channel with a first temperature sensor having a control temperature set point, and supplying electrical power to a heating wire inserted into a fluid flow channel of the hose to supply heat to the fluid or interrupting the supply of electrical power to the heating wire. Electrical power is supplied to the heating wire when the temperature detected is below the temperature set point, and electrical power to the heating wire is interrupted when the temperature detected reaches the temperature set point.

The method of the preceding paragraph can optionally include, additionally and/or alternatively, any one or more of the following features, configurations and/or additional components:

A further embodiment of the foregoing method can further include providing heat to the external surface of the fitting. The heat can be provided by a portion of the heating wire wrapped around the external surface of the fitting.

A further embodiment of any of the foregoing methods can further include detecting a temperature of the external surface of a wall of the fitting opposite a fluid flow channel with a second temperature sensor having a maximum temperature set point, and interrupting the supply of electrical power to the heating wire when the temperature detected reaches the maximum temperature set point.

A further embodiment of any of the foregoing methods, wherein the steps of detecting the temperature, supplying electrical power to the heating wire when the temperature detected is below the control temperature set point, and interrupting the supply of electrical power when the temperature detected reaches the control temperature set point, can occur automatically when power is supplied to the temperature control unit.

### Summation

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, alignment or shape variations induced by thermal, rotational or vibrational operational conditions, and the like.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A temperature control unit (10) comprising:
a fitting (12) comprising:
a fluid inlet (18);
a fluid outlet (20);
a flow channel (30) extending from the fluid inlet to the fluid outlet; and
a passage (32) extending through a wall of the fitting to the flow channel;
a heating wire (22), wherein the heating wire extends through the passage and into the flow channel;
a first temperature sensor (44), wherein the first temperature sensor is secured to an external surface of the fitting opposite the flow channel and wherein the first temperature sensor is electrically connected to the heating wire; and
a housing (24), wherein the first temperature sensor and portions of each of the fitting and the heating wire are contained within the housing.

2. The temperature control unit of claim 1, wherein the first temperature sensor has a control temperature set point, and wherein the first temperature sensor is configured to close an electrical circuit with the heating wire to allow electrical power to be supplied to the heating wire when a temperature detected by the first temperature sensor is below the temperature set point, and wherein the first temperature sensor is configured to open the electrical circuit with the heating wire thereby interrupting the supply of electrical power to the heating wire when a temperature detected by the first temperature sensor is at or above the temperature set point.

3. The temperature control unit of claim 2 and further comprising:
a second temperature sensor (46), wherein the second temperature sensor is secured to the external surface of the fitting opposite the flow channel and is electrically connected to the heating wire; and
wherein the second temperature sensor is an override temperature sensor having a maximum temperature set point, wherein the supply of electrical power to the heating wire is interrupted when a temperature detected by the second temperature sensor reaches the maximum temperature set point.

4. The temperature control unit of claim 3, wherein the first and second temperature sensors are bimetallic-type mechanical thermal sensors.

5. The temperature control unit of any one of claims claim 2 to 4, wherein the heating wire (22) is wrapped around an external surface of a portion of the fitting contained within the housing.

6. The temperature control unit of claim 5, wherein the external surface of the fitting comprises a spiral groove in which the heating wire is wrapped.

7. The temperature control unit of claim 6, wherein the heating wire extends from the spiral groove through the passage and into the flow channel.

8. The temperature control unit of any one of the preceding claims, further comprising:
a coupling (16) attached to the fluid outlet and configured to connect to a hose.

9. The temperature control unit of claim 8, wherein the heating wire is wrapped around the external surface of the fitting multiple times, and wherein a number of times the heating wire is wrapped around the external surface of the fitting is greater when the coupling is configured to connect to a hose having a smaller internal diameter than when the coupling is configured to connect to a hose having a larger internal diameter.

10. The temperature control unit of claim 8 or claim 9, wherein the heating wire extends out through the fitting fluid outlet and into a flow channel of the hose.

11. The temperature control unit of any one of the preceding claims, wherein a portion of the wall of the fitting to which the first temperature sensor is attached has a reduced thickness.

12. The temperature control unit of any one of the preceding claims, further comprising:
a fastener (34, 36) configured to hold the heating wire in the passage; and
a seal (38, 39) configured to block fluid flow through the passage.

13. The temperature control unit of any one of the preceding claims, further comprising:
an electrical power source (25) configured to supply electrical power to the heating wire, wherein electrical connections to the heating wire and the first temperature sensor are contained within the housing.

14. An automatic temperature-controlled heated hose assembly comprising:
a temperature control unit according to any one of the preceding claims; and
a hose having a second flow channel in fluid communication with the fluid outlet, wherein the heating wire extends into the second flow channel for at least a partial length of the hose.

15. A method of controlling a fluid temperature in a hose, the method comprising:
connecting a temperature control unit (10) to the hose;
providing a fluid flow to the hose through a fitting (22) of the temperature control unit;
detecting a temperature of an external surface of a wall of the fitting opposite a fluid flow channel with a first temperature sensor (44) having a control temperature set point;
supplying electrical power to a heating wire (22) inserted into a fluid flow channel of the hose to supply heat to the fluid within the hose, wherein electrical power is supplied to the heating wire when the temperature detected is below the control temperature set point; and
interrupting the supply of electrical power to the heating wire when the temperature detected reaches the control temperature set point.
